(19) **Europäisches Patentamt**

**European Patent Office**

**Office européen des brevets**

(11) **EP 0 742 044 B1**

(12) **EUROPEAN PATENT SPECIFICATION**

(45) Date of publication and mention
of the grant of the patent:
**04.10.2001 Bulletin 2001/40**

(51) Int Cl.$^7$: **B01J 23/42**, B01J 32/00,
C10G 11/05

(21) Application number: **95303151.5**

(22) Date of filing: **10.05.1995**

(54) **Process for the preparation of a CO oxidation promoter**

Verfahren zur Herstellung eines CO-Oxydationspromotors

Procédé pour la préparation d'un promoteur d'oxydation de CO

(84) Designated Contracting States:
**DE GB NL**

(43) Date of publication of application:
**13.11.1996 Bulletin 1996/46**

(73) Proprietor: **INDIAN OIL CORPORATION Ltd.**
**Bombay-400051, Maharashtra (IN)**

(72) Inventors:
 • **Kuvettu, Mohan Prabhu**
   **Faridabad 121 006 (IN)**
 • **Ray, Sanjay Kumar**
   **New Delhi 110 002 (IN)**
 • **Shende, Viswas Bhajandas**
   **Mathura (UP) 281 006 (IN)**
 • **Ghosh, Sobhan**
   **Haryana (IN)**
 • **Santra, Manoranjan**
   **Haryana (IN)**
 • **Debnath, Shyamal**
   **Haryana (IN)**
 • **Sharma, Shankar**
   **Haryana (IN)**
 • **Thakur, Ram Mohan**
   **Haryana (IN)**
 • **Dixit, Jagdev Kumar**
   **Haryana (IN)**

(74) Representative: **Belcher, Simon James**
**Urquhart-Dykes & Lord**
**Tower House**
**Merrion Way**
**Leeds LS2 8PA (GB)**

(56) References cited:
 **EP-A- 0 354 525**     **GB-A- 1 081 110**
 **US-A- 4 252 636**     **US-A- 4 332 782**
 **US-A- 4 542 118**

## Description

Field of the invention

This invention relates to the catalyst composition, a method of making a catalyst and its use in fluid catalytic conversion process. In particular, this invention relates to the preparation of catalyst microspheres containing metal which promotes oxidation of carbon monoxide to carbon dioxide during regeneration of the catalyst by the burning of coke therefrom.

Prior art

In fluid catalytic cracking, a stream of hydrocarbon feed is contacted with fluidised catalyst particles in a reactor at a temperature around 490 to 550°C. During such a cracking process, the hydrocarbon feed is converted into valuable petroleum products along with the deposition of significant amount of coke on the catalyst. The deposition of coke makes the catalyst unfit for further reaction. However, a major amount of the activity of the spent catalyst can be regenerated by burning off most of the coke. For this purpose, the resulting products are separated from the cracking zone, and then stripped off volatile hydrocarbons, and passed to a catalyst zone. In the catalyst regenerator, the coked catalyst is contacted with oxygen rich air, so that deposited coke burns into carbon monoxide and carbon dioxide gases. Generally regeneration is carried out at high temperatures of about 600 to 675°C. Higher the temperature, more is the removal of coke. After regeneration, the catalyst is returned to the cracking zone for further catalysing the cracking of heavy hydrocarbons.

A major disadvantage associated while regenerating FCC catalysts is that of afterburning, which is descriptive of further burning of CO to $CO_2$ and takes place in a dilute phase. It is advisable to avoid afterburning as it could lead to very high temperatures, which may damage the equipment as well permanently destroy the catalyst activity.

Furthermore, in the recent years, environment regulations are becoming very stringent about the emission of CO into the atmosphere, which necessitates changes in the functioning of FCC units, irrespective of the costs of petroleum refining. Hence need has arisen to develop a catalyst or a process which can reduce or eliminate afterburning as well as emission of CO into atmosphere.

US-2382382 and US-3563911 disclose methods to increase the regeneration temperature to 690 to 760°C in the presence of high concentration of $O_2$ in the regenerator, so that there is complete combustion of spend coke to $CO_2$ in the regeneration level. However, metallurgical limitations do not permit the adoption of such a method with existing plants. It is proposed in US-2647860 to add 0.1 to 1% chromic oxide to an FCC catalyst to promote the combustion of CO to $CO_2$ and to prevent after burning. Though, such a process helps in preventing afterburning, it does not provide a control in the $CO_2$/CO ratio to the desired level at present time. The prior art process only concerned with minimising the problem of after burning. The use of chromic oxide beyond 1%, (in order to increase the $CO_2$/CO, ratio) had undesirable effect of increasing the coke level due to the catalysts dehydrogenation function. Subsequently developed art processes described in US-3696025 where titanium oxide was used could change the $CO_2$/CO ratio from 1.4 to 2.2.

In prior art processes disclosed in US-4097535 and US-4093535, noble metals such as Pt, Pd, have been impregnated in the Y type zeolite which is the active component of the FCC catalyst. Such catalysts with 25 ppm Pt and 25 ppm Pd though significantly control $CO_2$/CO ratio, suffer from flexibility such as, (1) addition of CO-combustion promoter cannot be terminated as and when required, (2) in order to increase the $CO_2$/CO ratio entire inventory has to be discharged and a fresh, more active composite FCC catalyst has to be loaded.

In the prior art processes discussed so far the CO combustion promotion technique involves addition of active component such as platinum, palladium, chromium etc into the FCC catalyst itself. This suffers from deficiencies as mentioned above. Moreover there is a trend among the refiners today to use separate particle additives, the effect of which can be controlled by initiating or terminating its addition. However, the preparation of separate particle additive depends, to a large extent, on the availability of suitable support and binding material.

US-4332782 describes a procedure of preparing pseudoboehmite, in which it is stated that crystallization time is more than 24 hours. GB-1603461 and US-3864461 disclose a procedure for the production a crystalline alumina of low bulk density but this alumina is also characterised by low alumina content in the final alumina cake, which makes the material unfit for spray drying.

It has been disclosed in the prior art (US-4476239, US-4443553 and CA-967136) that, addition of a small amount of aluminium hydroxy chloride or hydroxy nitrate reduces the viscosity of the slurry containing zeolite and other components.

US-A-4542118 discloses the preparation of an organic composition from a slurry of alumina and aluminium chlorhydrol.

Objects of the invention

An object of this invention is to propose a process for the preparation of a CO oxidation promoter for hydrocarbon conversion catalyst.

Another object of this invention is to propose a process for the preparation of a CO oxidation promoter for hydrocarbon conversion catalyst, said promoter having the required attrition strength and density.

Still another object of this invention is to propose a binder for use in such a promoter.

Further objects and advantages of this invention will be more apparent from the ensuing example.

Description of the invention

According to this invention there is provided a process for the preparation of a CO oxidation promoter having improved ABD conversion and attrition properties for use in hydrocarbon conversion comprising the steps of preparing a slurry by intimately mixing a binder being aluminium hydroxy chloride or aluminium hydroxy nitrate into peptised pseudoboehmite, subjecting such a slurry to the step of spray drying to obtain microspheres, calcining the microspheres and then impregnating the calcined microspheres with platinum, wherein collodial silica is present in the amount of 10 to 60% wt of the total solids content of said slurry.

This invention relates to a process for producing FCC catalyst additive. More specifically the present invention concerns the preparation of FCC catalyst additive suitable to promote CO-combustion in the regenerator. Preparation of CO-combustion promoter was accomplished utilising highly crystalline, pseudoboehmite, alumina, in short crystallisation time. A suitable binder is aluminium hydroxy chloride or aluminium hydroxy nitrate. These materials act as good binders, and improves apparent bulk density (ABD). In accordance with one embodiment, clays are used as filler. The clay component is incorporated in the aqueous alumina slurry in an amount ranging from 25 to 50 wt%, based on the total solids content of aqueous slurry.

Colloidal silica is present in the range 10 to 60 wt% (based on the total solids content of the slurry) to improve the attrition resistance of the catalyst microspheres.

The catalyst microspheres of the present invention are prepared by intimate mixing of pseudoboehmite peptised with formic or nitric acid, colloidal silica and binder. In accordance with one embodiment, kaoline is used as a wetting agent. Prior to the addition of any ingredient, the pseudoboehmite is made free flowing by any known method, such as continuous stirring for duration not less than 60 minutes. To this alumina slurry, small quantity of peptising agent such as nitric acid or formic acid is added. This was followed by addition of colloidal silica, clay and a binder. Uniform slurry composition is ensured by stirring and mixing for at least 2 to 3 hours.

The spray drying step is conducted using inlet temperature in the range of 300 to 360°C and outlet gas temperature in the range 100 to 130°C. During the spray drying step, the moisture content of the particle is reduced from 10 to 40 wt%. The spray dried additive microspheres have a particle size of the order of 20 to 150 μm.

After spray drying, the additive is calcined at a temperature in the range of 400 to 700°C, for a period of 60 to 120 minutes. During the calcination, pseudoboehmite gets converted to hard gamma alumina phase, while the binder is transformed into solid state and volatile acid chlorides or nitrides escape into the atmosphere.

The calcined microspheres were tested for attrition resistance. This method measures the attrition at a high constant air jet velocity. The fine additive was removed continuously from the attrition zone by elustriation into a flask-thimble assembly, which was weighed at intervals. These test conditions were similar to those encountered in hydrocarbon conversion operations. The attrited or overhead additive so measured is expressed as the weight percent overhead. Percent attrition is measured as follows:

$$\% \text{ attrition} = \frac{g \text{ overhead in } 5\text{-}20 \text{ hours} \times 100}{50 \text{ } g \text{ (initial) charge-}g \text{ overhead in } 0\text{-}5 \text{ h period}}$$

High attrition value is desirable for retaining the microspheres in the reactor.

Activity is imparted to the aforesaid microspheres by slurrying the calcined particles in precalculated weight or dilute chloroplatinic acid and further evaporating to dryness on a hot plate. Further, prior to evaluation these microspheres are calcined between 400 to 600°C. The addition of 0.03% platinum increase the $CO_2$/CO ratio in the range of 11 to 47.

The evaluation of platinum doped CO-combustion promoter is carried out in a fixed bed MAT unit. For this, 0.03 g of CO-promoter was thoroughly mixed with 1.97 g of spent catalyst containing 0.85% coke. After loading the catalyst in a reactor, the same was heated to 500 to 600°C, in inert nitrogen atmosphere. When the temperature of the reactor stabilises, nitrogen flow is discontinued and replaced by air at a rate of 18 to 20 ml per minute. The flue gas generated thereby was collected during the initial 20 minutes homogenised and its composition is determined by gas chromatography.

Having described the basic aspects of the present invention, the following non-limiting examples illustrate specific embodiment thereof:

EXAMPLE 1

375 g of 19.2% hydrochloric acid was heated to 90 to 98°C in a 2 litre conical flask. 168 g of aluminum metal slurry with 25.72% metal powder was added to it till the pH reached 3.8 and the resulting solution was clear. At the end, 380 g of aluminium chlorhydrol with 22% $Al_2O_3$ was obtained.

EXAMPLE 2

PREPARATION OF ALUMINUM HYDROXY NITRATE (AHN)

375 g of 37.3% nitric acid was slowly heated to 90 to 98°C in a 2 litre conical flask. 168 g of aluminum metal slurry with 25.72% metal powder was added to it under agitation. A clear solution at pH 3.8 was obtained. At the end, 20 g of aluminum hydroxy nitrate with 28% $Al_2O_3$ was obtained.

EXAMPLE 3

PREPARATION OF PSEUDOBOEHMITE ALUMINA

723 g of sodium aluminate (42% $Al_2O_3$, 35.4% $Na_2O$, 22% $H_2O$) was dissolved in 1900 g of hot DM water. The undissolved residue was filtered out and the clear solution was heated to 90 to 95°C. In a 4 litre vessel, 564 g of aluminum sulphate $(Al_2(SO_4)_3) \cdot 16H_2O$ was dissolved in 1600 g of hot DM water, heated to 80°C and kept under stirring. To this, hot (90 to 95°C) sodium aluminate solution was added in about 30 minutes till the pH reached between 9.5 and 9.8. At the end, entire slurry was transferred to a 4 litre capacity plastic container and heated to 95 to 98°C. On 48 hours crystallisation, the products were filtered out washed repeatedly to give a alumina with residual soda less than 0.2% and crystallinity more than 92%.
The same experiment was repeated with crystallisation time ranging from 1 to 50 hours. The BET N2, surface area and X-ray crystallinity for these products is given below:

| Crystallisation time (h) | X-ray crystallinity (% gamma phase) | Surface area $m^2.g^{-1}$ |
|---|---|---|
| 0 | 75.0 | 271 |
| 1 | 80.1 | 267 |
| 2 | 89.6 | 258 |
| 3 | 90.0 | 224 |
| 4 | 90.5 | 225 |
| 6 | 90.0 | 219 |
| 8 | 86.0 | 224 |
| 10 | 87.3 | 229 |
| 22.5 | 97.0 | 255 |
| 29 | 92.7 | 225 |
| 35 | 89 | 214 |
| 42 | 97 | 227 |
| 50 | 87 | 221 |

EXAMPLE 4

PREPARATION OF BINDERLESS CO PROMOTER

19 g of concentrated (70%) nitric acid was diluted in 400 g of DM water. 55 g of dry alumina (30% wt loss) was added to the acid under stirring and kept for aging for 4 hours. Further, 450 g of wet alumina cake (16.3% solid) was added to this slurry and the entire mixture was homogenised by stirring for 60 minutes. This slurry with a solid concentration of 17% was spray dried at 350°C. 325+ 100- mesh fraction was calcined at 550°C. Different concentrations of Pt was deposited on these microspheres by slurrying calcined microspheres with precalculated amount of dilute (376 ppm Pt) chloroplatinic acid. The performance and physical properties of the promoter are given below:

| Catalyst ABD | Attrn index | Pt (ppm) | $CO_2$ | CO | $CO_2/CO$ | Conv |
|---|---|---|---|---|---|---|
| 0.652 | 20 | 940 | 99.05 | 0.95 | 104.26 | 97.72 |
| | | 600 | 98.3 | 1.70 | 57.82 | 95.90 |
| | | 325 | 97.93 | 2.07 | 47.26 | 95.0 |

This example shows that the CO promoter developed demands improvement in density and attrition resistance.

EXAMPLE 5

PREPARATION OF BINDERLESS CO PROMOTER WITH $SiO_2$ AS FILLERS

584 g of alumina cake (14% solid) was slurried in 320 g of colloidal silica (30% $SiO_2$). The mixture was homogenised by stirring for 30 minutes to produce a slurry with composition 40.6% $Al_2O_3$, 59.4% $SiO_2$. This slurry was spray dried at 350°C. 325+, 100-mesh fraction of microspheres were calcined at 550°C. Further, 325 ppm of Pt was impregnated followed by calcination prior to evaluation. The properties of the promoter are given below:

| Catalyst ABD g.cm$^{-3}$ | Attrn (%) | Pt (ppm) | $CO_2$ % | CO % | $CO_2/CO$ | Conv % |
|---|---|---|---|---|---|---|
| 0.652 | 10.0 | 325 | 97.47 | 2.53 | 38.53 | 93.9 |

EXAMPLE 6

PREPARATION OF BINDERLESS CO PROMOTER WITH SILICA AND CLAY AS FILLER.

102 g of alumina (14% $Al_2O_3$), 66 g of colloidal silica (30%) and 40 g of clay were mixed with 15 g of DM water to yield a homogeneous slurry with a solid concentration of 30.9 wt%. The composition of the slurry was 21% $Al_2O_3$, 20% silica and 50% clay. This slurry was spray dried at 340"C to produce microspheres. They were calcined at 550°C.

| Catalyst ABD g.cm$^{-3}$ | Attrn (%) | Pt (ppm) | $CO_2$ % | CO % | $CO_2/CO$ | Conv (%) |
|---|---|---|---|---|---|---|
| 0.777 | 20.0 | 325 | 95.1 | 4.90 | 19.4 | 88.21 |

As is seen from Examples 5 and 6, addition of clay and silica as filler could not improve the physical properties of the CO promoter in absence of a suitable binder.

EXAMPLE 7

PREPARATION OF CO PROMOTER WITH IMPROVED ATTRITION AND BULK DENSITY.

1100 g of pseudoboehmite (16.3% solid) was made free flowing with 22 g of formic acid and 25.21 g of DM water. To this slurry 327.3 g of aluminium chlorhydrol ((17.3%) solid) was added and was made free flowing by stirring. This slurry with a solid concentration of 17.3%, 74% $Al_2O_3$, 26% aluminium chlorhydrol was spray dried at 340°C, 325+, 100-mesh fraction was calcined at 650°C for 1 hour. On the calcined microspheres 400 and 200 ppm of Pt was deposited prior to evaluation. Given below are the physical properties and performance data.

| Catalyst ABD g.cm$^{-3}$ | Attrn (%) | Pt (ppm) | $CO_2$ % | CO % | $CO_2/CO$ | Conv (%) |
|---|---|---|---|---|---|---|
| 0.92 | 8.28 | 400 | 97.7 | 2.3 | 42.4 | 94.4 |
| | | 200 | 93.6 | 6.4 | 14.6 | 84.58 |

EXAMPLE 8

PREPARATION OF CO PROMOTER WITH PSEUDOBOEHMITE ALUMINA CRYSTALLISED IN 3 HOURS.

In this example, above experiment was repeated, except that pseudoboehmite was crystallized in 3 hours. This example demonstrates that, alumina crystallized in 3 hours is suitable for developing promoters with improved attrition property, ABD, and performance. Given below are the performance data.

| Catalyst ABD g.cm$^{-3}$ | Attrn (%) | Pt (ppm) | $CO_2$ % | CO % | $CO_2$/CO | Conv |
|---|---|---|---|---|---|---|
| 0.81 | 4.0 | 200 | 91.85 | 8.15 | 12.27 | 80.35 |

EXAMPLE 9

PREPARATION OF CO PROMOTER USING PSEUDOBOEHMITE AND ALUMINIUM HYDROXY NITRATE

5 g of formic acid (86%) was diluted with 40 g of DM water. To this, 250 g of pseudoboehmite cake with solid content of 16.3% was added and dispersed by stirring. 50 g of aluminium hydroxynitrate with a solid content of 28% was then added and the mixture was made free flowing by vigorous stirring. Finally, a slurry with a solid concentration of 15.9% and composition of 74% $Al_2O_3$ hydroxy nitrate alumina was spray dried at 340°C inlet temperature and 120°C outlet temperature. 325+, 100- mesh fraction obtained after sieving was calcined at 600°C for 1 hour. 400 ppm platinum was impregnated into the additive and the sample was calcined prior to evaluation. The performance and properties are shown below:

| Catalyst ABD g.cm$^{-3}$ | Attrn (%) | Pt (ppm) | $CO_2$ % | CO % | $CO_2$/CO | Conv (%) |
|---|---|---|---|---|---|---|
| 0.82 | 5.0 | 400 | 96.9 | 3.1 | 31.26 | 92.53 |

The above example illustrates that aluminium hydroxy nitrate also acts as a good binder for pseodoboehmite.

EXAMPLE 10

PREPARATION OF CO PROMOTER USING PSEUDOBOEHMITE CLAY AND CHLORHYDROL

10 g of formic acid (86%) was diluted in 150 g of DM water. To this, 650 g of pseudoboehmite cake with solid content of 16.3% was added. The cake was well dispersed and then to this 110 g of aluminium chlorhydrol was added. The slurry was made free flowing by vigorous stirring. 82 g of kaolin clay was added and dispersed. The final slurry with a composition: 51% $Al_2O_3$, 34% clay, 15% chlorhydrol alumina and with a solid content of 20% was spray dried at 340°C, inlet temperature and 120°C outlet temperature. The spray dried product was sieved, 325+, 100-mesh fraction was calcined at 650°C for 1 hour. The product was further impregnated with 400 ppm of platinum and calcined prior to evaluation. The results are shown below:

| Catalyst ABD g.cm$^{-3}$ | Attrn (%) | Pt (ppm) | $CO_2$ % | CO % | $CO_2$/CO | Conv (%) |
|---|---|---|---|---|---|---|
| 0.81 | 2.6 | 400 | 93 | 7 | 13.34 | 83.1 |

EXAMPLE 11

PREPARATION OF CO PROMOTER USING PSEUDOBOEHMITE COLLOIDAL SILICA AND ALUMINIUM CHLORHYDROL

1350 g of pseudoboehmite (16.3% solid) was slurried in 22 g of formic acid (86%) and to this 101.4 g of colloidal silica was mixed.
Further, 363.3 g of aluminium chlorhydrol (25% solid) was added under vigorous stirring, to give a slurry composition of 70% alumina, 10% silica and 20@ aluminium chlorhydrol. This slurry was spray dried at 340°C. 325+, 100-mesh fraction was calcined at 650°C, followed by deposition of 200 ppm of Pt. The physico-chemical properties and performance results are given below:

| Catalyst ABD g.cm$^{-3}$ | Attrn (%) | Pt (ppm) | $CO_2$ % | CO % | $CO_2$/CO | Conv (%) |
|---|---|---|---|---|---|---|
| 0.84 | 1.5 | 200 | 90.19 | 9.81 | 9.19 | 76.3 |

Examples 10 and 11 prove that, use of colloidal silica and weighting material clay in combination with aluminium chlorhydrol improve the attrition resistance of the microspheres formed thereby.

**Claims**

1. A process for the preparation of a CO oxidation promoter having improved ABD and attrition properties for use in hydrocarbon conversion comprising the steps of preparing a slurry by intimately mixing colloidal silica, a binder being aluminium hydroxy chloride or aluminium hydroxy nitrate and optionally clay into peptised pseudoboehmite, subjecting such a slurry to the step of spray drying to obtain microspheres, calcining the microspheres and then impregnating the calcined microspheres with platinum, wherein collodial silica is present in the amount of 10 to 60% wt of the total solids content of said slurry.

2. A process as claimed in claim 1 which comprises reacting a mixture of sodium aluminate and aluminium sulphate at 95 to 98°C for 3 to 48 hours to obtain said pseudoboehmite.

3. A process as claimed in claim 1 which comprises in adding a peptesing agent, such as nitric or formic acid, to alumina slurry followed by addition of colloidal silica and optionally clay and binder, subjecting such a slurry to the step of stirring.

4. A process as claimed in claim 1 wherein clay is present in the amount of 25 to 60 wt% of the total solids content of said slurry.

5. A process as claimed in claim 1 wherein said pseudoboehmite is free flowing.

6. A process as claimed in claim 1 wherein the step of spray drying is carried out at a temperature of 300 to 360°C and outlet gas temperature of 100 to 130°C.

7. A process as claimed in claim 1 wherein the step of calcination is carried out at a temperature of 400 to 700°C for a period of 60 to 120 minutes.

8. A process as claimed in claim 1 wherein the step of calcination is carried out at a temperature of 400 to 600°C.

9. A process as claimed in claim 1 wherein the calcined microspheres are prepared into a slurry and chloroplatinic acid is added thereto and then dried.

**Patentansprüche**

1. Verfahren zur Herstellung eines CO-Oxidationspromotors mit verbessertem scheinbarem Schüttgewicht (ABD) und verbesserten und Abriebeigenschaften zur Verwendung in der Kohlenwasserstoffumwandlung, umfassend die folgenden Schritte: Herstellen einer Masse durch inniges Mischen von kolloidalem Siliziumdioxid, einem Bindemittel, das Aluminiumhydroxychlorid oder Aluminiumhydroxynitrat und wahlweise Ton ist, zu peptisiertem Pseudoboehmit, Unterziehen einer derartigen Masse dem Schritt des Sprühtrocknens, um Mikrosphären zu erhalten, Kalzinieren der Mikrosphären und anschließendes Imprägnieren der kalzinierten Mikrosphären mit Platin, wobei kolloidales Siliziumdioxid in der Menge von 10 bis 60 Gewichtsprozent des gesamten Feststoffgehalts der Masse gegenwärtig ist.

2. Verfahren nach Anspruch 1, welches Reagierenlassen einer Mischung von Natriumaluminat und Aluminiumsulfat 3 bis 48 Stunden lang bei 95 bis 98 °C, um das Pseudoboehmit zu erhalten, umfasst.

3. Verfahren nach Anspruch 1, welches Beimengen eines peptisierenden Mittels, wie beispielsweise Salpeter- oder Ameisensäure, zu Aluminiumoxidmasse, gefolgt von der Beigabe von kolloidalem Siliziumdioxid und wahlweise Ton und Bindemittel, und Unterziehen einer derartigen Masse dem Schritt des Schüttelns umfasst.

4.  Verfahren nach Anspruch 1, wobei Ton in der Menge von 25 bis 60 Gewichtsprozent des gesamten Feststoffgehalts der Masse gegenwärtig ist.

5.  Verfahren nach Anspruch 1, wobei das Pseudoboehmit frei fließend ist.

6.  Verfahren nach Anspruch 1, wobei der Schritt des Sprühtrocknens bei einer Temperatur von 300 bis 360 °C und Auslassgastemperatur von 100 bis 130 °C ausgeführt wird.

7.  Verfahren nach Anspruch 1, wobei der Schritt des Kalzinierens für einen Zeitraum von 60 bis 120 Minuten bei einer Temperatur von 400 bis 700 °C ausgeführt wird.

8.  Verfahren nach Anspruch 1, wobei der Schritt des Kalzinierens bei einer Temperatur von 400 bis 600 °C ausgeführt wird.

9.  Verfahren nach Anspruch 1, wobei die kalzinierten Mikrosphären zu einer Masse bereitet werden und Chlorplatinsäure dazu beigegeben und anschließend getrocknet wird.

**Revendications**

1.  Procédé de préparation d'un promoteur d'oxydation du. CO. ayant des propriétés de densité apparente (ABD) et d'attrition améliorées et destiné à être utilisé dans la conversion d'hydrocarbure, comprenant les étapes consistant à préparer une boue en mélangeant intimement de la silice colloïdale, un liant qui est de l'hydroxychlorure. d'aluminium ou de l'hydroxynitrate d'aluminium, et le cas échéant de l'argile, dans de la pseudoboehmite peptisée, à soumettre cette boue à une étape de séchage par pulvérisation afin d'obtenir des microsphères, à calciner les microsphères et ensuite à imprégner les microsphères calcinées avec du platine, la silice colloïdale étant présente en une quantité de 10 à 60% en poids ramenée à la teneur totale en solides de ladite boue.

2.  Procédé selon la revendication 1, qui comprend la mise à réagir d'un mélange d'aluminate de sodium et de sulfate d'aluminium à une température de 95 à 98°C pendant 3 à 48 heures afin d'obtenir ladite pseudoboehmite.

3.  Procédé selon la revendication 1, qui comprend l'ajout à la boue d'alumine d'un agent peptisant tel que l'acide nitrique ou l'acide formique, suivi de l'ajout de silice colloïdale et le cas échéant d'argile et de liant, et le fait de soumettre cette boue à une étape d'agitation.

4.  Procédé selon la revendication 1, dans lequel l'argile est présente en une quantité de 25 à 60% en poids ramenée à la teneur totale en solides de ladite boue.

5.  Procédé selon la revendication 1, dans lequel ladite pseudoboehmite est à écoulement libre.

6.  Procédé selon la revendication 1, dans lequel l'étape de séchage par pulvérisation se fait à une température de 300 à 360°C et à une température du gaz en sortie de 100 à 130°C.

7.  Procédé selon la revendication 1, dans lequel l'étape de calcination se fait à une température de 400 à 700°C pendant une durée de 60 à 120 minutes.

8.  Procédé selon la revendication 1, dans lequel l'étape de calcination se fait à une température de 400 à 600°C.

9.  Procédé selon la revendication 1, dans lequel les microsphères calcinées sont préparées sous la forme d'une boue à laquelle de l'acide chloroplatinique est ajouté et qui est ensuite séchée.